# EUROPÄISCHE PATENTSCHRIFT

(11) **EP 3 302 856 B1**
(45) Veröffentlichungstag und Bekanntmachung des Hinweises auf die Patenterteilung: **05.10.2022**
(21) Anmeldenummer: 16726540.4
(22) Anmeldetag: 30.05.2016
(51) Int. Cl.: B23B 31/02, B23B 31/117, B23Q 3/12, B23Q 3/155, B23Q 3/157, B23B 31/00

(54) **WERKZEUGSPANNSYSTEM**
TOOL CLAMPING SYSTEM
SYSTÈME DE SERRAGE D'OUTIL

(30) Priorität: 30.05.2015 DE 202015102802 U
(43) Veröffentlichungstag der Anmeldung: 11.04.2018
(73) Patentinhaber: Broetje-Automation GmbH, 26180 Rastede (DE)
(72) Erfinder: SENDZIK, Egbert, 26125 Oldenburg (DE)
(74) Vertreter: Gottschald, Jan
(86) Internationale Anmeldenummer: PCT/EP2016/062176
(87) Internationale Veröffentlichungsnummer: WO 2016/193218

(56) Entgegenhaltungen:
- EP-A1- 1 598 133
- DE-U1-202006 014 812
- US-A- 1 975 877
- US-A- 2 219 907
- US-A- 3 028 770
- US-A- 5 011 319
- US-A1- 2010 270 756
- US-B1- 6 619 877

## Beschreibung

Die Erfindung betrifft ein Werkzeugspannsystem mit zwei metallischen Wellenabschnitten gemäß dem Oberbegriff des Anspruchs 1 sowie eine Werkzeugmaschineneinheit mit einem derartigen Werkzeugspannsystem. Ein deartiges Werkzeugspannsystem ist aus dem Dokument EP 1 598 133 A1 bekannt.

Werkzeugmaschinen mit rotierenden Werkzeugen sind üblicherweise mit einem Werkzeugspannsystem ausgestattet, das einen manuellen oder automatisierten Werkzeugwechsel erlaubt. Hierfür stellt das Werkzeugspannsystem die Möglichkeit der lösbaren Verbindung zweier Wellenabschnitte mit einer gemeinsamen geometrischen Längsachse bereit, wobei einer der Wellenabschnitte je nach Anwendungsfall ein Bestandteil einer Antriebsspindel der Werkzeugmaschinen sein kann. Bei einem bekannten Werkzeugspannsystem (WO 02/05992 A1) verbindet das Werkzeugspannsystem die Antriebsspindel einer Werkzeugmaschine mit einem Spannfutter, das auf der Spindelseite einen Steilkegel aufweist. Der Steilkegel wird mittels einer spindelseitigen Steilkegelaufnahme gespannt.

Das obige Werkzeugspannsystem, insbesondere die Steilkegelaufnahme, ist üblicherweise mit einem Spannmechanismus ausgestattet, der einen eigenen Antrieb und eine Mehrzahl sich mitdrehender Einzelteile aufweist. Durch diesen aufwendigen Aufbau des Werkzeugspannsystems ist eine Miniaturisierung nicht ohne weiteres möglich, ohne das Rundlaufverhalten und die Drehmomentübertragung zu beeinträchtigen. Eine solche Miniaturisierung ist in manchen Bereichen, insbesondere beim Bohren von Löchern im Rahmen der Herstellung von Flugzeug-Strukturbauteilen gefordert. Ferner ist die Automatisierung des Werkzeugwechsels mit dem Einsatz zusätzlicher Antriebe verbunden und damit konstruktiv aufwendig. Ferner ist aus der EP 1 698 133 A1 ein Werkzeugspannsystem bekannt.

Der Erfindung liegt das Problem zugrunde, ein automatisierbares Werkzeugspannsystem anzugeben, das eine Miniaturisierung bei guter Rundlaufgenauigkeit und hoher Drehmomentübertragung erlaubt.

Das obige Problem wird durch ein Werkzeugspannsystem mit den Merkmalen von Anspruch 1 gelöst.

Wesentlich ist die grundsätzliche Überlegung, dass sich aus den zu verbindenden Wellenabschnitten selbst eine Schnappverbindung herstellen lässt. Dabei wird die bei metallischen Wellenabschnitten zumindest in geringem Maße vorliegende Elastizität genutzt, um ein entsprechendes Überschnappen zu realisieren.

Weiter ist erkannt worden, dass das obige Überschnappen durch eine Verriegelungs-Schwenkbewegung der beiden Wellenabschnitte gegeneinander um die gemeinsame geometrische Längsachse erzielbar ist. Im Einzelnen wird vorgeschlagen, dass der erste Wellenabschnitt des Werkzeugspannsystems endseitig einen Verriegelungsstift und der zweite Wellenabschnitt endseitig eine Verriegelungshülse aufweist, wobei zur Herstellung einer lösbaren, antriebstechnischen Verbindung der erste Wellenabschnitt mit seinem Verriegelungsstift in die Verriegelungshülse des zweiten Wellenabschnitts koaxial einführbar ist. Diese antriebstechnische Verbindung dient der Übertragung von rotatorischen Antriebsbewegungen sowie von Antriebsmomenten.

Für die Herstellung der Verbindung werden die beiden Wellenabschnitte in einer Verriegelungs-Schwenkbewegung gegeneinander um eine gemeinsame geometrische Längsachse in eine Verriegelungs-Schwenkstellung verschwenkt. Durch das Verschwenken kommt es zu einem Schnappvorgang aufgrund elastischer Verformung des Verriegelungsstifts und/oder der Verriegelungshülse. Hierfür ist mindestens eine am Umfang des Verriegelungsstifts angeordnete Rastausformung vorgesehen, die im Zuge der Verriegelungs-Schwenkbewegung mindestens eine korrespondierende Gegenrastausformungen der Verriegelungshülse überschnappt. Im Sinne der Realisierung einer hohen Rundlaufgenauigkeit sind vorzugsweise mindestens drei über den Umfang des Verriegelungsstifts verteilte Rastausformungen vorgesehen, die im Zuge der Verriegelungs-Schwenkbewegung mindestens drei korrespondierende Gegenrastausformungen der Verriegelungshülse unter elastischer Verformung von Verriegelungsstift und/oder Verriegelungshülse überschnappen.

Es ergibt sich aus der obigen Erläuterung, dass mit der vorschlagsgemäßen Lösung eine Verbindung zweier metallischer Wellenabschnitte herstellbar ist, ohne dass irgendwelche separate Spannvorrichtungen erforderlich sind. Die Herstellung der Verbindung geht lediglich auf das Einführen des Verriegelungsstifts in die Verriegelungshülse bei anschließender Verriegelungs-Schwenkbewegung der beiden Wellenabschnitte gegeneinander zurück.

Dadurch, dass keine separaten Komponenten für die Herstellung der Verbindung erforderlich sind, lässt sich mit der vorschlagsgemäßen Lösung auch bei einer Miniaturisierung des Spannsystems eine außerordentlich gute Rundlaufgenauigkeit erzielen. Auch die Übertragung hoher Drehmomente ist unproblematisch, da sich ein Formschluss für die Bereitstellung solcher Drehmomente leicht realisieren lässt.

Weiter ist ein automatisiertes Herstellen und Lösen der Verbindung leicht möglich, da hierfür lediglich eine Linearbewegung, nämlich das Einführen des Verriegelungsstifts, und eine Schwenkbewegung, nämlich die Verriegelungs-Schwenkbewegung, erforderlich ist. Auf zusätzliche Antriebe für das Herstellen und Lösen der Verbindung kann verzichtet werden.

Eine besonders prozesssichere Verbindung ergibt sich aus einer Kombination der Merkmale des Anspruchs 3, so dass die Verbindung nicht nur kraftschlüssig, sondern bezogen auf ein Verschwenken der Wellenabschnitte gegeneinander auch beidseitig formschlüssig ist.

In einer bevorzugten Variante gemäß Anspruch 5 ist ein Entriegelungs-Schwenkbereich vorgesehen, innerhalb dessen das Einführen des Verriegelungsstifts in die Verriegelungshülse möglich ist. Sofern der Entriegelungs-Schwenkbereich sich über einen nennenswerten Schwenkbereich erstreckt, muss auf die genaue Winkellage der beiden Wellenabschnitte zueinander beim Einführen des Verriegelungsstifts nicht geachtet werden. Dies vereinfacht den Aufwand für die Automatisierung der Herstellung der Verbindung beträchtlich.

Alternativ oder zusätzlich kann es gemäß Anspruch 6 vorgesehen sein, dass die Geometrie der Wellenabschnitte die Ausrichtung der beiden Wellenabschnitte zueinander in eine Entriegelungs-Schwenkstellung beim Einführen des Verriegelungsstifts unterstützt. Hierfür ist zumindest ein Wellenabschnitt mit einer entsprechenden Einführschräge ausgestattet.

Eine weitere Vereinfachung für die Automatisierung der Herstellung der Verbindung ergibt sich gemäß Anspruch 7, indem beim Einführen des Verriegelungsstifts ein radiales Spiel zwischen dem Verriegelungsstift und der Verriegelungshülse vorgesehen ist. Die Genauigkeitsanforderungen an die Bewegungsführung bei der Automatisierung sind im Ergebnis außerordentlich gering.

Die weiter bevorzugten Ausgestaltungen gemäß den Ansprüchen 8 und 9 betreffen bevorzugte Gestaltungen von Verriegelungsstift und Verriegelungshülse, die einen besonders geringen Verschleiß beim Herstellen und Lösen der Verbindung erwarten lassen.

Die weiter bevorzugten Ausgestaltungen gemäß Anspruch 10 betreffen bevorzugte Möglichkeiten der axialen Festlegung der verbundenen Wellenabschnitte zueinander. Dies ist insbesondere bei schwingungsbehafteten Anwendungen, wie beispielsweise dem Vibrationsbohren, vorteilhaft.

Das vorschlagsgemäße Werkzeugspannsystem lässt sich in ganz verschiedenen Bereichen einer Werkzeugmaschine einsetzen. Bei der besonders bevorzugten Ausgestaltung gemäß Anspruch 11 stellt das Werkzeugspannsystem eine Verbindung zwischen einem rotierenden Werkzeug und der Werkzeugseite eines Spannfutters bereit. Bei der ebenso bevorzugten Ausgestaltung gemäß Anspruch 16 dagegen stellt das Werkzeugspannsystem eine Verbindung zwischen der Spindelseite eines Spannfutters und der Antriebsspindel einer Werkzeugmaschine bereit. Andere Einsatzbeispiele sind denkbar.

Nach einer weiteren Lehre gemäß Anspruch 12, der eigenständige Bedeutung zukommt, wird eine Werkzeugmaschineneinheit mit einer Antriebsspindel und einem der Antriebsspindel zugeordneten Werkzeugantrieb sowie einem Werkzeugspannsystem der beschriebenen Art beansprucht.

Wesentlich nach der weiteren Lehre ist die Tatsache, dass die Werkzeugmaschineneinheit mit einem Spannfutter ausgestattet ist.

Das Spannfutter weist eine obige Spindelseite für die Verbindung mit einer Antriebsspindel einer Werkzeugmaschine und eine obige Werkzeugseite für die Verbindung mit dem Werkzeug auf. Ein solches Spannfutter findet oftmals bei Werkzeugwechselsystemen Anwendung. Dabei sind in einem Werkzeugmagazin eine Vielzahl von Spannfuttern vorgesehen, die jeweils mit einem Werkzeug bestückt sind. Beim Werkzeugwechsel werden die mit dem jeweiligen Werkzeug bestückten Spannfutter an der Antriebsspindel der Werkzeugmaschine ausgetauscht. Dabei ist ein vorschlagsgemäßes Werkzeugspannsystem auf der Spindelseite oder der Werkzeugseite des Spannfutters vorgesehen. In beiden Fällen ergibt sich eine gute Automatisierbarkeit der Herstellung der Verbindung zwischen den jeweiligen Wellenabschnitten.

Hinsichtlich eventueller Vorteile und möglicher Ausgestaltungen des Spannfutters und der vorschlagsgemäßen Werkzeugmaschineneinheit darf auf die Ausführungen zum vorschlagsgemäßen Werkzeugspannsystem verwiesen werden.

Im Folgenden wird die Erfindung anhand einer lediglich ein Ausführungsbeispiel darstellenden Zeichnung naher erläutert. In der Zeichnung zeigt
- Fig. 1: eine vorschlagsgemäße Werkzeugmaschineneinheit mit einem vorschlagsgemäßen Werkzeugspannsystem,
- Fig. 2: das vorschlagsgemäße Werkzeugspannsystem a) vor der Herstellung der Verbindung zwischen den Wellenabschnitten und b) nach der Herstellung der Verbindung zwischen den Wellenabschnitten,
- Fig. 3: das Werkzeugspannsystem gemäß Fig. 2 im Querschnitt entlang der Schnittlinie III-III a) in einer Entriegelungs-Schwenkstellung und b) in der Verriegelungs-Schwenkstellung, und
- Fig. 4: das Werkzeugspannsystem gemäß Fig. 3 in der Detailansicht IV.

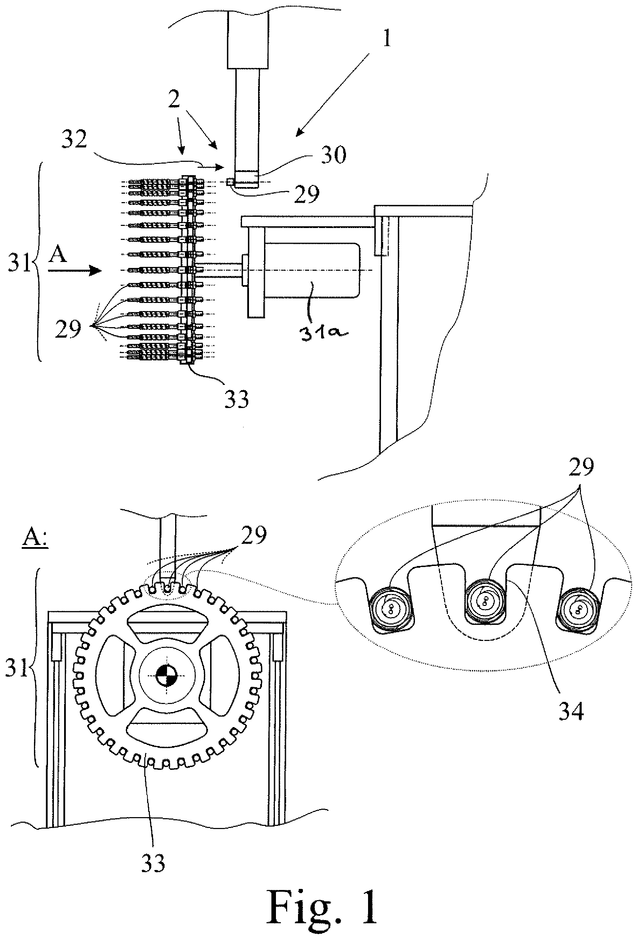

Bei der in Fig. 1 gezeigten Werkzeugmaschine handelt es sich um eine Bohr-/Nietmaschine für die Herstellung von Flugzeug-Strukturbauteilen. Dargestellt ist lediglich die Werkzeugmaschineneinheit 1 der Werkzeugmaschine, die als Bohreinheit ausgestaltet ist. Die Werkzeugmaschineneinheit 1 als solche wird weiter unten im Detail erläutert. Im Folgenden wird zunächst eine Erläuterung des vorschlagsgemäßen Werkzeugspannsystems 2 der Werkzeugmaschineneinheit 1 vorangestellt.

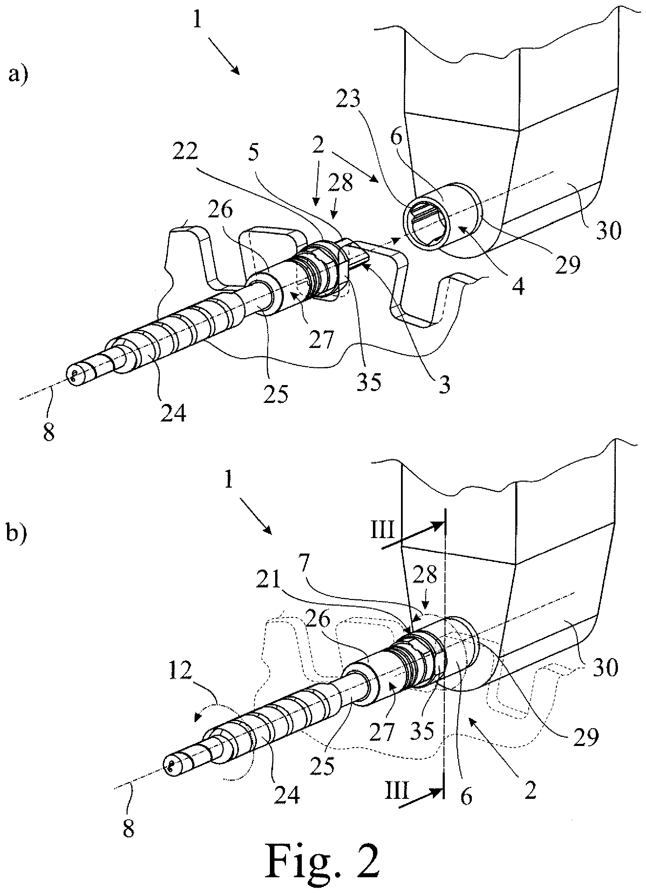

Der grundsätzliche Aufbau des vorschlagsgemäßen Werkzeugspannsystems 2 lässt sich am besten der Darstellung gemäß Fig. 2 entnehmen. Das Werkzeugspannsystem 2 weist zwei metallische Wellenabschnitte 3,4 auf, wobei der erste Wellenabschnitt 3 endseitig einen Verriegelungsstift 5 und der zweite Wellenabschnitt 4 endseitig eine Verriegelungshülse 6 aufweist. Bei den Wellenabschnitten 3,4 handelt es sich hier und vorzugsweise um Antriebswellenabschnitte.

Vorzugsweise sind beide Wellenabschnitte 3, 4 aus einem Stahlmaterial ausgestaltet, das die für das vorschlagsgemäße, noch zu erläuternde Überschnappen benötigte Elastizität mitbringt. Für einen geringen Verschleiß sind die Wellenabschnitte 3, 4 vorzugsweise oberflächenbehandelt. Grundsätzlich kann es vorgesehen sein, dass die beiden Wellenabschnitte 3, 4 aus unterschiedlichen Materialien ausgestaltet sind.

Zur Herstellung einer lösbaren, antriebstechnischen Verbindung ist der erste Wellenabschnitt 3 mit seinem Verriegelungsstift 5 in die Verriegelungshülse 6 des zweiten Wellenabschnitts 4 koaxial einführbar, wie sich aus dem Übergang von Fig. 2a auf Fig. 2b ergibt. Für die Komplettierung der antriebstechnischen Verbindung ist es vorgesehen, dass die beiden Wellenabschnitte 3,4 in einer Verriegelungs-Schwenkbewegung 7 gegeneinander um eine gemeinsame geometrische Längsachse 8 in eine Verriegelungs-Schwenkstellung gegeneinander verschwenkbar sind. Die Verriegelungs-Schwenkbewegung 7 wird bei dem in Fig. 2 dargestellten und insoweit bevorzugten Ausführungsbeispiel durch ein entsprechendes Verschwenken der Verriegelungshülse 6 in Fig. 2b erzeugt.

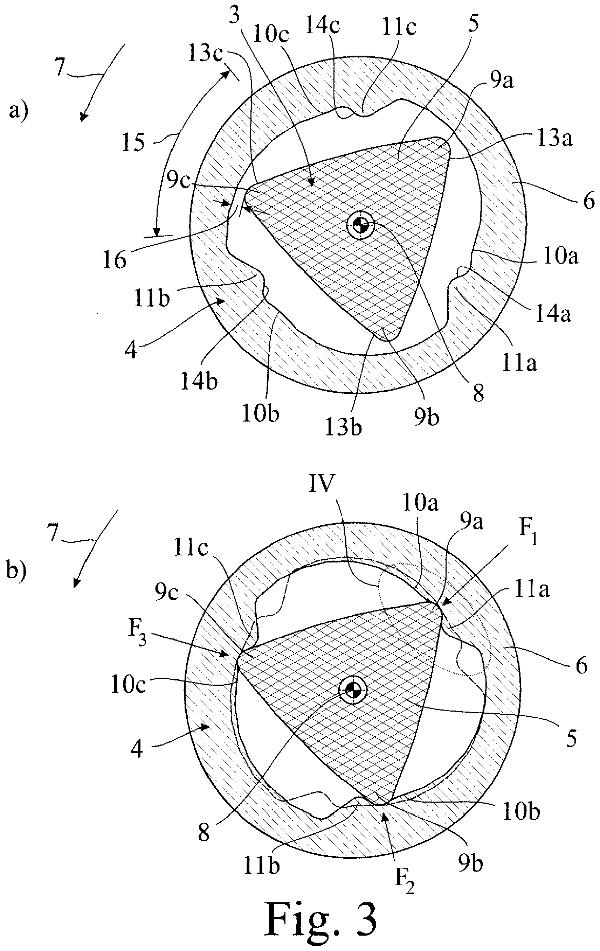

Von besonderer Bedeutung für die vorschlagsgemäße Lehre ist die Tatsache, dass hier und vorzugsweise mindestens drei über den Umfang des Verriegelungsstifts 5 verteilte Rastausformungen 9a-c im Zuge der Verriegelungs-Schwenkbewegung 7 korrespondierende Gegenrastausformungen 10a-c der Verriegelungshülse 6 unter elastischer Verformung von Verriegelungsstift 5 und/oder Verriegelungshülse 6 überschnappen. Die Rastausformungen 9a-c sind im Hinblick auf eine gute Rundlaufgenauigkeit gleichmässig über den Umfang des Verriegelungsstifts 5 verteilt. Hier und vorzugsweise handelt es sich bei der elastischen Verformung in erster Linie um eine Verformung der Verriegelungshülse 6. Das Überschnappen der Gegenrastausformungen 10a, 10b, 10c ergibt sich aus dem Übergang von Fig. 3a auf Fig. 3b. Grundsätzlich reicht es vorschlagsgemäß aus, dass mindestens eine Rastausformung 9a-c und mindestens eine Gegenrastausformung 10a-c vorgesehen sind. Alle Ausführungen zu den mindestens drei Rastausformungen 9a-c und Gegenrastausformungen 10a-c gelten hierfür entsprechend.

Es darf darauf hingewiesen werden, dass vorliegend alle auf eine Rotationsachse bezogene Angaben wie radial, axial, koaxial o. dgl. stets auf die im verbundenen Zustand gemeinsame geometrische Längsachse 8 der beiden Wellenabschnitte 3,4 bezogen sind.

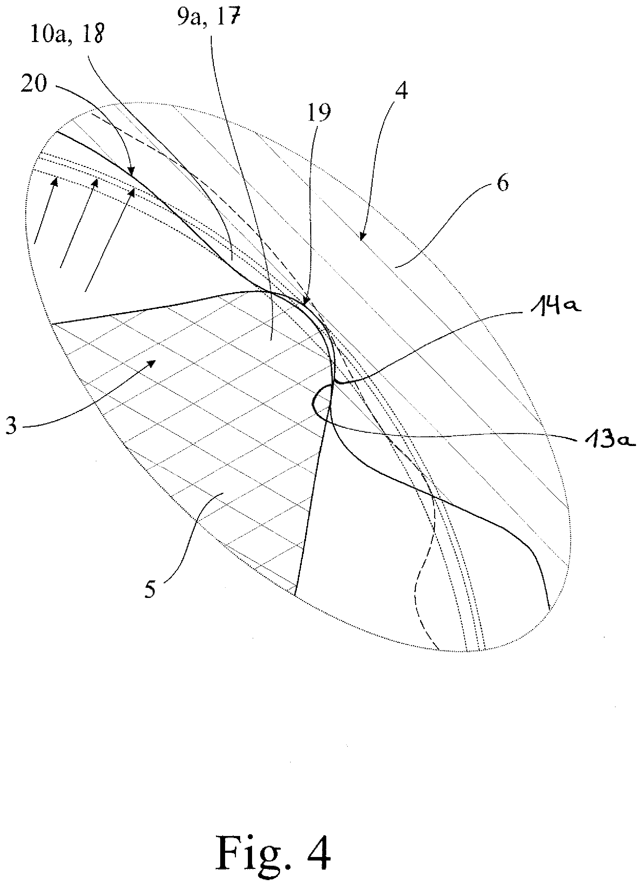

Bei dem dargestellten und insoweit bevorzugten Ausführungsbeispiel handelt es sich sowohl bei der Rastausformung 9a-9c als auch bei der Gegenrastausformung 10a-10c jeweils um eine radiale Ausformung, die sich entsprechend bezogen auf die Längsachse 8 in radialer Richtung erstreckt. Dies bedeutet, dass sich die jeweilige Ausformung in bezogen auf die Längsachse 8 radialer Richtung nach innen oder nach außen erhebt. Fig. 4 zeigt, dass sich die Rastausformungen 9a-9c des Verriegelungsstifts 5 radial nach außen ausformen, während sich die Gegenrastausformungen 10a-10c der Verriegelungshülse 6 radial nach innen ausformen. Dies kann auch umgekehrt vorgesehen sein.

Eine besonders gute Rundlaufgenauigkeit lässt sich bei dem dargestellten Ausführungsbeispiel dadurch realisieren, dass in der Verriegelungs-Schwenkstellung (Fig. 3b) ein auf die elastische Verformung zurückgehender, radialer Kraftfluss zwischen dem Verriegelungsstift 5 und Verriegelungshülse 6 herrscht. Dieser Kraftfluss verläuft über die Rastausformungen 9a-9c und die Gegenrastausformungen 10a-10c, wie in Fig. 3b durch die Kraftvektoren F₁, F₂ und F₃ angedeutet ist.

Eine Zusammenschau der Fig. 3b und 4 ergibt, dass im Zuge der Verriegelungs-Schwenkbewegung 7 die beiden Wellenabschnitte 3,4, hier und vorzugsweise der Verriegelungsstift 5 und die Verriegelungshülse 6, beim Erreichen der Verriegelungs-Schwenkstellung einen Schwenk-Endanschlag 11a-c ausbilden. Der Schwenk-Endanschlag 11a-c teilt sich hier auf die drei Rastausformungen 9a-9c auf, wie noch erläutert wird. Im Ergebnis herrscht in der Verriegelungs-Schwenkstellung zwischen dem Verriegelungsstift 5 und der Verriegelungshülse 6 ein in beide Schwenkrichtungen wirkender Formschluss zwischen den beiden Wellenabschnitten 3,4. Der Schwenk-Endanschlag 11a-c ist so ausgelegt, dass er eine Drehmomentstütze gegenüber einem Antriebsmoment in Antriebsrichtung 12 abstützt. Dabei wird vorliegend davon ausgegangen, dass die Antriebsrichtung 12, wie bei Bohrwerkzeugen üblich, stets identisch ist.

Für die Erzeugung des obigen Schwenk-Endanschlags 11a-c kommen hier und vorzugsweise mindestens drei über den Umfang des Verriegelungsstifts 5 verteilte Anschlagausformungen 13a-c im Zuge der Verriegelungs-Schwenkbewegung 7 in blockierendem Eingriff mit korrespondierenden Gegenanschlagsausformungen 14a-c der Verriegelungshülse 6. Eine besonders kompakte Ausgestaltung ergibt sich dadurch, dass die Anschlagausformungen 13a-c und/oder die Gegenanschlagausformungen 14a-c gleichzeitig die oben genannten Rastausformungen 9a-c oder Gegenrastausformungen 10a-c sind. Grundsätzlich reicht es vorschlagsgemäß aus, dass mindestens eine Anschlagausformung 13a-c und mindestens eine Gegenanschlagausformung 14a-c vorgesehen sind. Alle Ausführungen zu den mindestens drei Anschlagausformungen 13a-c und Gegenanschlagausformugnen 14a-c gelten hierfür entsprechend.

Fig. 3 zeigt, dass bezogen auf das Verschwenken der beiden Wellenabschnitte 3,4 zueinander eine Entriegelungs-Schwenkstellung vorgesehen ist, in der der erste Wellenabschnitt 3 mit seinem Verriegelungsstift 5 in die Verriegelungshülse 6 des zweiten Wellenabschnitts 4 koaxial einführbar ist. Hier und vorzugsweise ist es sogar so, dass bezogen auf das Verschwenken der beiden Wellenabschnitte 3,4 zueinander ein ganzer Entriegelungs-Schwenkbereich 15 vorgesehen ist, innerhalb dessen der erste Wellenabschnitt 3 mit seinem Verriegelungsstift 5 in die Verriegelungshülse 6 des zweiten Wellenabschnitts 4 koaxial einführbar ist. In besonders bevorzugter Ausgestaltung überstreicht der Entriegelungs-Schwenkbereich 15 einen Winkelbereich von mindestens 25°, insbesondere einen Winkelbereich von mindestens 40°. Damit ist beim Einführen des ersten Wellenabschnitts 3 in den zweiten Wellenabschnitt 4 keine genaue Winkellage der beiden Wellenabschnitte 3,4 zueinander einzuhalten, was das automatisierte Herstellen der Verbindung zwischen den beiden Wellenabschnitten 3,4 vereinfacht.

Alternativ oder zusätzlich kann es vorgesehen sein, dass zumindest ein Wellenabschnitt 3,4 eine nicht dargestellte Einführschräge aufweist, die beim Einführen des Verriegelungsstifts 5 in die Verriegelungshülse 6 eine Schwenkausrichtung der beiden Wellenabschnitte 3,4 zueinander in die Entriegelungs-Schwenkstellung unterstützt. Für diesen Fall kann der Entriegelungs-Schwenkbereich 15 knapp bemessen sein, da die Schwenkausrichtung der beiden Wellenabschnitte 3,4 selbsttätig erfolgt. Fig. 3a zeigt, dass in der Entriegelungs-Schwenkstellung, hier und vorzugsweise im gesamten Entriegelungs-Schwenkbereich 15, ein radiales Spiel 16 zwischen dem Verriegelungsstift 5 und der Verriegelungshülse 6 vorgesehen ist. Durch dieses radiale Spiel 16 ist beim Einführen des ersten Wellenabschnitts 3 in den zweiten Wellenabschnitt 4 nicht notwendigerweise auf die Positionierung der beiden Wellenabschnitte 3,4, insbesondere auf die Koaxialität der beiden Wellenabschnitte 3,4, zu achten, so dass das automatisierte Herstellen der Verbindung weiter vereinfacht wird.

Der Formgebung von Rastausformung 9a-c und Gegenrastausformung 10a-c kommt für die vorliegende Erfindung besondere Bedeutung zu. Hier und vorzugsweise ist es so, dass die Rastausformung 9a-c im Querschnitt quer zu der gemeinsamen geometrischen Längsachse 8 eine Kontur mit einer radialen Überhöhung 17 bildet, wie in Fig. 4 gezeigt ist. Fig. 4 zeigt weiter, dass die Gegenrastausformung 10a-c im Querschnitt quer zu der gemeinsamen geometrischen Längsachse 8 eine Kontur mit einer radialen Überhöhung 18 ausbildet. Dies kann grundsätzlich auch nur für eine der beiden genannten Ausformungen vorgesehen sein. Hier und vorzugsweise ist es so, dass die Überhöhung 17 der Rastausformung 9a-c und/oder die Überhöhung 18 der Gegenrastausformung 10a-c jeweils eine stetige, insbesondere rundliche Kurve ausbildet bzw. ausbilden, wodurch sich eine gleichmäßige Belastung der Wellenabschnitte 3, 4 während des Überschnappens ergibt.

Interessant bei der radialen Überhöhung 18 der Gegenrastausformung 10a-c ist die Tatsache, dass die Konturbereiche 19,20 beidseits der radialen Überhöhung 18 unterschiedlich radial angeordnet sind derart, dass zu Beginn der Verriegelungs-Schwenkbewegung 7, hier und vorzugsweise in einer oben genannten Entriegelungs-Schwenkstellung, ein ebenfalls bereits genanntes radiales Spiel 16 zwischen dem Verriegelungsstift 5 und der Verriegelungshülse 6 vorliegt (Fig. 3a), während in der Verriegelungs-Schwenkstellung ein radialer Kraftfluss zwischen dem Verriegelungsstift 5 und Verriegelungshülse 6 herrscht (Fig. 3b). Damit wird erreicht, dass nach dem vorschlagsgemäßen Überschnappen der oben angesprochene radiale Kraftschluss zwischen dem Verriegelungsstift 5 und der Verriegelungshülse 6 verbleibt.

Fig. 3 zeigt, dass der Verriegelungsstift 5 und die Verriegelungshülse 6 bezogen auf die gemeinsame Längsachse 8 zumindest abschnittsweise rotationssymmetrisch ausgestaltet sind. Dies kann auch für lediglich eine dieser beiden Komponenten vorgesehen sein. Bei der dargestellten Rotationssymmetrie ergibt sich eine besonders hohe Rundlaufgenauigkeit.

Bei dem dargestellten und insoweit bevorzugten Ausführungsbeispiel ist es ferner so, dass die Kontur im Querschnitt quer zu der gemeinsamen geometrischen Längsachse 8 des Verriegelungsstifts 5 und/oder der Verriegelungshülse 6 zumindest über einen axialen Abschnitt gleichbleibend ausgestaltet ist. Um über diesen axialen Abschnitt eine möglichst gleichbleibende Nachgiebigkeit der Verriegelungshülse 6 für die oben angesprochene elastische Verformung zu garantieren, kann es erforderlich sein, dass die Verriegelungshülse 6 mit gezielten Schwächungen, insbesondere mit Schlitzen, ausgestattet ist (nicht dargestellt).

Eine mechanisch besonders stabile und hinsichtlich des resultierenden Rundlaufverhaltens besonders vorteilhafte Ausgestaltung besteht darin, dass die Kontur des Verriegelungsstifts 5 im Querschnitt quer zu der gemeinsamen geometrischen Längsachse 8 eine mehreckige Grundform mit einer ungeradzahligen Anzahl von Eckbereichen aufweist, wobei die Eckbereiche jeweils eine Rastausformung 9a-c bilden. Hier und vorzugweise ist es so, dass der Verriegelungsstift 5 im Querschnitt quer zu der gemeinsamen geometrischen Längsachse 8 eine dreieckige Grundform aufweist, deren Eckbereiche die Rastausformungen 9a-c bilden.

Insbesondere beim Bohren ist eine definierte axiale Lage der Wellenabschnitte 3,4 zueinander von besonderer Bedeutung. Entsprechend ist es bei dem dargestellten und insoweit bevorzugten Ausführungsbeispiel vorgesehen, dass die beiden Wellenabschnitte 3,4 beim axialen Einführen des Verriegelungsstifts 5 in die Verriegelungshülse 6 beim Erreichen einer axialen End-Einführstellung einen axialen Endanschlag 21 ausbilden. Hier und vorzugsweise ist es so, dass sich für die Ausbildung des axialen Endanschlags 21 ein auf die gemeinsame geometrische Längsachse 8 ausgerichteter Ringabsatz 22 an den Verriegelungsstift 5 anschließt, der beim axialen Einführen des Verriegelungsstifts 5 in blockierende Anlage mit einer Stirnfläche 23 der Verriegelungshülse 6 kommt.

In einer hier nicht dargestellten Variante ist weiter vorgesehen, dass die beiden Wellenabschnitte 3,4 während der Verriegelungs-Schwenkbewegung 7 einen zusätzlichen Formschluss miteinander bilden, der in der Verriegelungsschwenkstellung ein axiales Abziehen des ersten Wellenabschnitts 3 vom zweiten Wellenabschnitt 4 entgegen der Einführrichtung blockiert. Dieser zusätzliche Formschluss kann beispielsweise nach Art eines Bajonett- Verschlusses vorgesehen sein.

Für die Anwendung des vorschlagsgemäßen Werkzeugspannsystems 2 sind wie weiter oben angedeutet weitere Varianten denkbar. Grundsätzlich kann das Werkzeugspannsystem für das Einspannen eines rotierenden Werkzeugs 24, hier und vorzugsweise für das Einspannen eines Bohrwerkzeugs, dienen. Dann ist es so, dass ein Wellenabschnitt der Schaft 25 des rotierenden Werkzeugs 24 und der andere Wellenabschnitt die Werkzeugseite 26 eines Spannfutters 27 ist.

Hier und vorzugsweise ist es allerdings so, dass ein Wellenabschnitt 3 die Spindelseite 28 des in Fig. 2 gezeigten Spannfutters 27 und der andere Wellenabschnitt 4 die Antriebsspindel 29 einer Werkzeugmaschineneinheit 1 ist.

Nachfolgend wird das Spannfutter 27 für ein rotierendes Werkzeug 24 beschrieben. Das Spannfutter 27 weist eine Spindelseite 28 für die Verbindung mit einer Antriebsspindel 29 einer Werkzeugmaschineneinheit 1 und eine Werkzeugseite 26 für die Verbindung mit dem Werkzeug 24, hier mit dem Bohrwerkzeug, auf. Entsprechend ist es so, dass die Spindelseite 28 oder die Werkzeugseite 26 einen Wellenabschnitt 3, 4 eines vorschlagsgemäßen Werkzeugspannsystems 2 ausbildet. Hier und vorzugsweise dient das vorschlagsgemäße Werkzeugspannsystem 2 bei dem Spannfutter 27 der Verbindung des Spannfutters 27 mit der Antriebsspindel 29 der Werkzeugmaschineneinheit 1.

Nach einer weiteren Lehre, der ebenfalls eigenständige Bedeutung zukommt, wird eine Werkzeugmaschineneinheit 1 mit einer Antriebsspindel 29 und einem der Antriebsspindel 29 zugeordneten Werkzeugantrieb 30 beansprucht, wobei der Antriebsspindel 29 ein Spannfutter 27 zugeordnet ist. Dabei ist es hier und vorzugsweise wiederum so, dass das vorschlagsgemäße Werkzeugspannsystem 2 der Verbindung des Spannfutters 27 mit der Antriebsspindel 29 der Werkzeugmaschineneinheit 1 dient.

Das vorschlagsgemäße Werkzeugspannsystem 2 lässt sich besonders vorteilhaft beim Vibrationsbohren einsetzen, da die mit dem vorschlagsgemäßen Werkzeugspannsystem 2 herstellbare Verbindung besonders prozesssicher, insbesondere besonders vibrationssicher ist. Entsprechend kann die Werkzeugmaschineneinheit 1 ohne weiteres für das Vibrationsbohren Vibrationsschwingungen, insbesondere in axialer Richtung in die Antriebsspindel 29 einleiten, wobei die Vibrationsschwingungen jedenfalls auch über das Spannfutter 27 verlaufen.

Wie oben angesprochen, lässt sich die mit dem vorschlagsgemäßen Werkzeugspannsystem 2 herstellbare Verbindung besonders gut automatisiert herstellen und wieder lösen. Die Fig. 1 und 2 zeigen hierfür eine bevorzugte Variante. Ferner ist eine Werkzeugwechseleinrichtung 31 vorgesehen, die eine Mehrzahl von mit Werkzeugen 24 bestückten Spannfuttern 27 aufnimmt. Die Werkzeugwechseleinrichtung 31 ist als solche motorisch mittels eines Werkzeugwechselantriebs 31a entlang der Längsachse 8 verstellbar, so dass zum Werkzeugwechsel die Werkzeugwechseleinrichtung 31 das Einführen des Verriegelungsstifts 5 in die Verriegelungshülse 6 vornimmt. Diese Einführbewegung ist in Fig. 1 mit dem Bezugszeichen 32 angedeutet.

Besonders interessant bei der in den Fig. 1 und 2 dargestellten Werkzeugmaschineneinheit 1 ist jedoch die Tatsache, dass zum Werkzeugwechsel der Werkzeugantrieb 30 die Verriegelungs-Schwenkbewegung 7 vornimmt. Dies wird dadurch bewerkstelligt, dass der Werkzeugantrieb 30 eine entsprechende Schwenkbewegung der Antriebsspindel 29 und damit der Verriegelungshülse 6 durchführt. Gleichzeitig legt die Werkzeugwechseleinrichtung 31 einen der Wellenabschnitte 3,4 des Spannfutters 27, hier den ersten Wellenabschnitt 3 bezogen auf ein Verschwenken um die gemeinsame geometrische Längsachse 8, fest. Dies ist hier und vorzugsweise dadurch realisiert, dass die Werkzeugwechseleinrichtung 31 ein Werkzeugmagazin 33 mit Aufnahmen 34 für die Spannfutter 27 aufweist, wobei die Aufnahmen 34 die Festlegung des jeweiligen Wellenabschnitts 3 vornehmen. Im Einzelnen ist dies dadurch realisiert, dass die Aufnahmen 34 jeweils formschlüssig verdrehsicher mit den Spannfuttern 27 in Eingriff stehen. Hierfür weisen die Spannfutter 27 jeweils Abflachungen 35 auf, die entsprechend mit den Aufnahmen 34 in verdrehsicherem Eingriff stehen. Das Werkzeugmagazin 33 ist in üblicher Weise motorisch, insbesondere durch den Werkzeugwechselantrieb 31a, schwenk- bzw. drehbar, um das jeweils einzuwechselnde Werkzeug 24 vor der Antriebsspindel 29, insbesondere koaxial zu der Antriebsspindel 29, zu positionieren. Das Auflösen einer durch das vorschlagsgemäße Werkzeugspannsystem 2 hergestellten Verbindung lässt sich in umgekehrter Weise realisieren. Im Übrigen sind andere konstruktive Lösungen für die automatisierte Durchführung eines Werkzeugwechsels denkbar.

## Patentansprüche

1. Werkzeugspannsystem (2) mit zwei metallischen Wellenabschnitten (3,4), wobei der erste Wellenabschnitt (3) endseitig einen Verriegelungsstift (5) und der zweite Wellenabschnitt (4) endseitig eine Verriegelungshülse (6) aufweist, wobei zur Herstellung einer lösbaren, antriebstechnischen Verbindung der erste Wellenabschnitt (3) mit seinem Verriegelungsstift (5) in die Verriegelungshülse (6) des zweiten Wellenabschnitts (4) koaxial einführbar und die beiden Wellenabschnitte (3,4) in einer Verriegelungs-Schwenkbewegung (7) gegeneinander um eine gemeinsame geometrische Längsachse (8) in eine Verriegelungs-Schwenkstellung verschwenkbar sind,
**dadurch gekennzeichnet,**
**dass** mindestens eine am Umfang des Verriegelungsstifts (5) angeordnete Rastausformung (9a-c), vorzugsweise mindestens drei über den Umfang des Verriegelungsstifts (5) verteilte Rastausformungen (9a-c), im Zuge der Verriegelungs-Schwenkbewegung mindestens eine korrespondierende Gegenrastausformung (10a-c) der Verriegelungshülse (6), vorzugsweise mindestens drei korrespondierende Gegenrastausformungen (10a-c) der Verriegelungshülse (6), unter elastischer Verformung von Verriegelungsstift (5) und/oder Verriegelungshülse (6) überschnappt bzw. überschnappen.

2. Werkzeugspannsystem nach Anspruch 1, **dadurch gekennzeichnet, dass** die Rastausformung (9a-c) und/oder die Gegenrastausformung (10a-c) als radiale Ausformung ausgestaltet ist bzw. sind.

3. Werkzeugspannsystem nach Anspruch 1 oder 2, **dadurch gekennzeichnet, dass** in der Verriegelungs-Schwenkstellung ein auf die elastische Verformung zurückgehender, radialer Kraftfluss zwischen dem Verriegelungsstift (5) und der Verriegelungshülse (6) herrscht, und/oder, dass im Zuge der Verriegelungs-Schwenkbewegung die beiden Wellenabschnitte (3,4), insbesondere der Verriegelungsstift (5) und die Verriegelungshülse (6), beim Erreichen der Verriegelungs-Schwenkstellung einen Schwenk-Endanschlag (11a-c) ausbilden, so dass in der Verriegelungs-Schwenkstellung zwischen dem Verriegelungsstift (5) und der Verriegelungshülse (6) ein in beiden Schwenkrichtungen wirkender Formschluss zwischen den beiden Wellenabschnitten (3,4) herrscht.

4. Werkzeugspannsystem nach einem der vorhergehenden Ansprüche, **dadurch gekennzeichnet, dass** mindestens eine am Umfang des Verriegelungsstifts (5) angeordnete Anschlagausformung (13a-c), vorzugsweise mindestens drei über den Umfang des Verriegelungsstifts (5) verteilte Anschlagausformungen (13a-c), im Zuge der Verriegelungs-Schwenkbewegung in blockierenden Eingriff mit mindestens einer korrespondierenden Gegenanschlagsausformung (14a-c) der Verriegelungshülse (6) kommt bzw. kommen und den Schwenk-Endanschlag (11a-c) ausbildet bzw. ausbilden, vorzugsweise, dass die mindestens eine Anschlagausformung (13a-c) und/oder die mindestens eine Gegenanschlagausformung (14a-c) gleichzeitig mindestens eine Rastausformung (9a-c) oder Gegenrastausformung (10a-c) ist bzw. sind.

5. Werkzeugspannsystem nach einem der vorhergehenden Ansprüche, **dadurch gekennzeichnet, dass** bezogen auf das Verschwenken der beiden Wellenabschnitte (3,4) zueinander eine Entriegelungs-Schwenkstellung vorgesehen ist, in der der erste Wellenabschnitt (3) mit seinem Verriegelungsstift (5) in die Verriegelungshülse (6) des zweiten Wellenabschnitts (4) koaxial einführbar ist, vorzugsweise, dass bezogen auf das Verschwenken der beiden Wellenabschnitte (3,4) zueinander ein Entriegelungs-Schwenkbereich (15) vorgesehen ist, innerhalb dessen der erste Wellenabschnitt (3) mit seinem Verriegelungsstift (5) in die Verriegelungshülse (6) des zweiten Wellenabschnitts (4) koaxial einführbar ist, vorzugsweise, dass der Entriegelungs-Schwenkbereich (15) einen Winkelbereich von mindestens 25°, vorzugsweise einen Winkelbereich von mindestens 40°, überstreicht.

6. Werkzeugspannsystem nach einem der vorhergehenden Ansprüche, **dadurch gekennzeichnet, dass** zumindest ein Wellenabschnitt eine Einführschräge aufweist, die beim Einführen des Verriegelungsstifts (5) in die Verriegelungshülse (6) eine Ausrichtung der beiden Wellenabschnitte (3,4) zueinander in die Entriegelungs-Schwenkstellung unterstützt.

7. Werkzeugspannsystem nach einem der vorhergehenden Ansprüche, **dadurch gekennzeichnet, dass** in der Entriegelungs-Schwenkstellung und/oder im Entriegelungs-Schwenkbereich (15) ein radiales Spiel (16) zwischen dem Verriegelungsstift (5) und der Verriegelungshülse (6) vorgesehen ist.

8. Werkzeugspannsystem nach einem der vorhergehenden Ansprüche, **dadurch gekennzeichnet, dass** die Rastausformung (9a-c) und/oder die Gegenrastausformung (10a-c) im Querschnitt quer zu der gemeinsamen geometrischen Längsachse (8) eine Kontur mit einer radialen Überhöhung (17,18) ausbildet, vorzugsweise, dass die Konturbereiche (19,20) beidseits der radialen Überhöhung (17) unterschiedlich radial angeordnet sind derart, dass zu Beginn der Verriegelungs-Schwenkbewegung (7), insbesondere in einer Entriegelungs-Schwenkstellung, ein radiales Spiel (16) zwischen dem Verriegelungsstift (5) und der Verriegelungshülse (6) vorliegt und dass in der Verriegelungs-Schwenkstellung ein radialer Kraftfluss zwischen dem Verriegelungsstift (5) und der Verriegelungshülse (6) herrscht.

9. Werkzeugspannsystem nach einem der vorhergehenden Ansprüche, **dadurch gekennzeichnet, dass** der Verriegelungsstift (5) und/oder die Verriegelungshülse (6) bezogen auf die gemeinsame geometrische Längsachse (8) zumindest abschnittsweise rotationssymmetrisch ausgestaltet ist bzw. sind, und/oder, dass die Kontur im Querschnitt quer zu der gemeinsamen geometrischen Längsachse (8) des Verriegelungsstifts (5) und/oder der Verriegelungshülse (6) zumindest über einen axialen Abschnitt gleichbleibend ausgestaltet ist, und/oder, dass die Kontur des Verriegelungsstifts (5) im Querschnitt quer zu der gemeinsamen geometrischen Längsachse (8) eine mehreckige Grundform mit einer ungeradzahligen Anzahl von Eckbereichen aufweist, die jeweils eine Rastausformung (9a-c) bilden, vorzugsweise, dass der Verriegelungsstift (5) im Querschnitt quer zu der gemeinsamen geometrischen Längsachse (8) eine dreieckige Grundform aufweist, deren Eckbereiche die Rastausformungen (9a-c) bilden.

10. Werkzeugspannsystem nach einem der vorhergehenden Ansprüche, **dadurch gekennzeichnet, dass** die beiden Wellenabschnitte (3,4) beim axialen Einführen des Verriegelungsstifts (5) in die Verriegelungshülse (6) beim Erreichen einer axialen End-Einführstellung einen axialen Endanschlag (21) ausbilden, vorzugsweise, dass sich für die Ausbildung des axialen Endanschlags (21) ein auf die gemeinsame geometrische Längsachse (8) ausgerichteter Ringabsatz (22) an den Verriegelungsstift (5) anschließt, und/oder, dass die beiden Wellenabschnitte (3,4) während der Verriegelungs-Schwenkbewegung (7) einen zusätzlichen Formschluss miteinander bilden, der in der Verriegelungs-Schwenkstellung ein axiales Abziehen des ersten Wellenabschnitts (3) vom zweiten Wellenabschnitt (4) entgegen der Einführrichtung blockiert.

11. Werkzeugspannsystem nach einem der vorhergehenden Ansprüche, **dadurch gekennzeichnet, dass** ein Wellenabschnitt (3) der Schaft (25) eines rotierenden Werkzeugs (24) und der andere Wellenabschnitt (4) die Werkzeugseite (26) eines Spannfutters (27) ist, und/oder, dass ein Wellenabschnitt (3) die Spindelseite (28) eines Spannfutters (27) und der andere Wellenabschnitt (4) die Antriebsspindel (29) einer Werkzeugmaschineneinheit (1) ist.

12. Werkzeugmaschineneinheit mit einer Antriebsspindel (29) und einem der Antriebsspindel (29) zugeordneten Werkzeugantrieb sowie einem Werkzeugspannsystem nach einem der vorhergehenden Ansprüche, wobei ein Spannfutter (27) für ein rotierendes Werkzeug (24) vorgesehen ist, wobei das Spannfutter (27) eine Spindelseite (28) für die Verbindung mit einer Antriebsspindel (29) der Werkzeugmaschineneinheit (1) und eine Werkzeugseite (26) für die Verbindung mit dem Werkzeug (24) aufweist, wobei die Spindelseite (28) oder die Werkzeugseite (26) einen Wellenabschnitt (3,4) des Werkzeugspannsystems (2) ausbildet.

13. Werkzeugmaschineneinheit nach Anspruch 12, **dadurch gekennzeichnet, dass** ein Vibrationserreger vorgesehen ist, der für das Vibrationsbohren Vibrationsschwingungen insbesondere in axialer Richtung in die Antriebsspindel (29) einleitet und dass die Vibrationsschwingungen über das Spannfutter (27) verlaufen.

14. Werkzeugmaschineneinheit nach Anspruch 12 oder 13, **dadurch gekennzeichnet, dass** eine Werkzeugwechseleinrichtung (31) vorgesehen ist, die eine Mehrzahl von mit Werkzeugen (24) bestückten Spannfuttern (27) aufnimmt, vorzugsweise, dass zum Werkzeugwechsel die Werkzeugwechseleinrichtung (31) das Einführen des Verriegelungsstifts (5) in die Verriegelungshülse (6) vornimmt.

15. Werkzeugmaschineneinheit nach einem der Ansprüche 12 bis 14, **dadurch gekennzeichnet, dass** der Werkzeugantrieb (30) die Verriegelungs-Schwenkbewegung (7) vornimmt, weiter vorzugsweise, dass während der Verriegelungs-Schwenkbewegung (7) die Werkzeugwechseleinrichtung (31) einen der Wellenabschnitte (3,4) des Spannfutters (27) bezogen auf ein Verschwenken um die gemeinsame geometrische Längsachse (8) festlegt, weiter vorzugsweise, dass die Werkzeugwechseleinrichtung (31) ein Werkzeugmagazin (33) mit Aufnahmen (34) für die Spannfutter (27) aufweist und dass die Aufnahmen (34) die Festlegung des jeweiligen Wellenabschnitts (3,4) vornehmen.

## Claims

1. Tool clamping system (2) having two metal shaft portions (3, 4), wherein the first shaft portion (3) has a locking pin (5) at its end and the second shaft portion (4) has a locking sleeve (6) at its end, wherein, to establish a releasable, drive-related connection, the first shaft portion (3) is coaxially introducible, with its locking pin (5), into the locking sleeve (6) of the second shaft portion (4) and the two shaft portions (3, 4) are pivotable with respect to one another, in a locking pivoting movement (7), about a common geometric longitudinal axis (8) into a locking pivoted position, **characterized**
**in that** at least one latching formation (9a-c), arranged at the circumference of the locking pin (5), preferably at least three latching formations (9a-c) distributed around the circumference of the locking pin (5), snap-fits or snap-fit, during the locking pivoting movement, over at least one corresponding mating latching formation (10a-c) of the locking sleeve (6), preferably at least three corresponding mating latching formations (10a-c) of the locking sleeve (6), with elastic deformation of the locking pin (5) and/or locking sleeve (6).

2. Tool clamping system according to Claim 1, **characterized in that** the latching formation (9a-c) and/or the mating latching formation (10a-c) is/are configured as a radial formation.

3. Tool clamping system according to Claim 1 or 2, **characterized in that**, in the locking pivoted position, a radial force flow, attributable to the elastic deformation, prevails between the locking pin (5) and the locking sleeve (6), and/or, during the locking pivoting movement, the two shaft portions (3, 4), in particular the locking pin (5) and the locking sleeve (6), form a pivoting end stop (11a-c) when the locking pivoted position is reached, such that, in the locking pivoted position between the locking pin (5) and the locking sleeve (6), a form fit that acts in both pivoting directions prevails between the two shaft portions (3, 4) .

4. Tool clamping system according to one of the preceding claims, **characterized in that** at least one stop formation (13a-c) arranged at the circumference of the locking pin (5), preferably at least three stop formations (13a-c) distributed around the circumference of the locking pin (5), comes or come into blocking engagement, during the locking pivoting movement, with at least one corresponding mating stop formation (14a-c) of the locking sleeve (6) and forms or form the pivoting end stop (11a-c), preferably **in that** the at least one stop formation (13a-c) and/or the at least one mating stop formation (14a-c) is/are at the same time at least one latching formation (9a-c) or mating latching formation (10a-c).

5. Tool clamping system according to one of the preceding claims, **characterized in that**, with regard to the pivoting of the two shaft portions (3, 4) with respect to one another, an unlocking pivoted position is provided, in which the first shaft portion (3) is coaxially introducible, with its locking pin (5), into the locking sleeve (6) of the second shaft portion (4), preferably **in that**, with regard to the pivoting of the two shaft portions (3, 4) with respect to one another, an unlocking pivoting region (15) is provided, within which the first shaft portion (3) is axially introducible, with its locking pin (5), into the locking sleeve (6) of the second shaft portion (4), preferably in that the unlocking pivoting region (15) extends over an angular range of at least 25°, preferably an angular range of at least 40°.

6. Tool clamping system according to one of the preceding claims, **characterized in that** at least one shaft portion has an introduction slope, which, when the locking pin (5) is introduced into the locking sleeve (6), supports alignment of the two shaft portions (3, 4) with respect to one another into the unlocking pivoted position.

7. Tool clamping system according to one of the preceding claims, **characterized in that**, in the unlocking pivoted position and/or in the unlocking pivoting region (15), a radial clearance (16) is provided between the locking pin (5) and the locking sleeve (6).

8. Tool clamping system according to one of the preceding claims, **characterized in that** the latching formation (9a-c) and/or the mating latching formation (10a-c) forms, in cross section transversely to the common geometric longitudinal axis (8), a contour with a radial elevation (17, 18), preferably **in that** the contour regions (19, 20) on either side of the radial elevation (17) are arranged differently radially such that, at the start of the locking pivoting movement (7), in particular in an unlocking pivoted position, there is a radial clearance (16) between the locking pin (5) and the locking sleeve (6) and such that, in the locking pivoted position, a radial force flow prevails between the locking pin (5) and the locking sleeve (6).

9. Tool clamping system according to one of the preceding claims, **characterized in that** the locking pin (5) and/or the locking sleeve (6) is/are designed to be at least partially rotationally symmetric with respect to the common geometric longitudinal axis (8), and/or **in that** the contour, as seen in cross section transverse to the common geometric longitudinal axis (8) of the locking pin (5) and/or of the locking sleeve (6), is designed to be constant at least over an axial portion, and/or **in that** the contour of the locking pin (5), as seen in cross section transverse to the common geometric longitudinal axis (8), has a polygonal basic shape with an odd number of corner regions, which each form a latching formation (9a-c), preferably **in that** the locking pin (5), as seen in cross section transverse to the common geometric longitudinal axis (8), has a triangular basic shape, the corner regions if which form the latching formations (9a-c) .

10. Tool clamping system according to one of the preceding claims, **characterized in that**, during the axial introduction of the locking pin (5) into the locking sleeve (6), the two shaft portions (3, 4) form an axial end stop (21) when an axial end introduction position is reached, preferably **in that**, for the formation of the axial end stop (21), an annular shoulder (22), aligned with the common geometric longitudinal axis (8), adjoins the locking pin (5), and/or **in that**, during the locking pivoting movement (7), the two shaft portions (3, 4) form an additional form fit with one another, which, in the locking pivoted position, blocks axial withdrawal of the first shaft portion (3) from the second shaft portion (4) counter to the introduction direction.

11. Tool clamping system according to one of the preceding claims, **characterized in that** one shaft portion (3) is the shank (25) of a rotating tool (24) and the other shaft portion (4) is the tool side (26) of a chuck (27), and/or **in that** one shaft portion (3) is the spindle side (28) of a chuck (27) and the other shaft portion (4) is the drive spindle (29) of a machine tool unit (1).

12. Machine tool unit having a drive spindle (29) and a tool drive, assigned to the drive spindle (29), and also a tool clamping system according to one of the preceding claims, wherein a chuck (27) for a rotating tool (24) is provided, wherein the chuck (27) has a spindle side (28) for connecting to a drive spindle (29) of the machine tool unit (1) and a tool side (26) for connecting to the tool (24), wherein the spindle side (28) or the tool side (26) forms a shaft portion (3, 4) of the tool clamping system (2).

13. Machine tool unit according to Claim 12, **characterized in that** a vibration exciter is provided, which, for vibration drilling, introduces vibrations in particular in an axial direction into the drive spindle (29), and **in that** the vibrations pass via the chuck (27).

14. Machine tool unit according to Claim 12 or 13, **characterized in that** a tool change device (31) is provided, which accommodates a plurality of chucks (27) equipped with tools (24), preferably **in that**, for a tool change, the tool change device (31) introduces the locking pin (5) into the locking sleeve (6).

15. Machine tool unit according to one of Claims 12 to 14, **characterized in that** the tool drive (30) carries out the locking pivoting movement (7), more preferably **in that**, during the locking pivoting movement (7), the tool change device (31) secures one of the shaft portions (3, 4) of the chuck (27) with respect to a pivoting movement about the common geometric longitudinal axis (8), more preferably **in that** the tool change device (31) has a tool magazine (33) with receptacles (34) for the chucks (27), and **in that** the receptacles (34) secure the respective shaft portion (3, 4).

## Revendications

1. Système de serrage d'outil (2) comportant deux parties d'arbre (3, 4) métalliques, la première partie d'arbre (3) présentant, côté extrémité, une tige de verrouillage (5) et la deuxième partie d'arbre (4) présentant, côté extrémité, un manchon de verrouillage (6) et, pour produire une liaison d'entraînement libérable, la première partie d'arbre (3) pouvant être insérée de manière coaxiale, par sa tige de verrouillage (5), dans le manchon de verrouillage (6) de la deuxième partie d'arbre (4) et les deux parties d'arbre (3, 4) pouvant être pivotées l'une par rapport à l'autre dans une position de pivotement de verrouillage autour d'un axe longitudinal (8) géométrique commun dans un mouvement de pivotement de verrouillage (7),
**caractérisé en ce**
**qu'**au moins une formation d'encliquetage (9a-c) disposée à la périphérie de la tige de verrouillage (5), de préférence au moins trois formations d'encliquetage (9a-c) réparties sur la périphérie de la tige de verrouillage (5), s'encliquète(nt) au cours du mouvement de pivotement de verrouillage sur au moins une formation d'encliquetage conjuguée (10a-c) correspondante du manchon de verrouillage (6), de préférence au moins trois formations d'encliquetage conjuguées (10a-c) correspondantes du manchon de verrouillage (6), avec déformation élastique de la tige de verrouillage (5) et/ou du manchon de verrouillage (6).

2. Système de serrage d'outil selon la revendication 1, **caractérisé en ce que** la formation d'encliquetage (9a-c) et/ou la formation d'encliquetage conjuguée (10a-c) est ou sont configurée(s) sous forme de formation radiale.

3. Système de serrage d'outil selon la revendication 1 ou 2, **caractérisé en ce que**, dans la position de pivotement de verrouillage, un flux de force radial découlant de la déformation élastique règne entre la tige de verrouillage (5) et le manchon de verrouillage (6), et/ou **en ce qu'**au cours du mouvement de pivotement de verrouillage, les deux parties d'arbre (3, 4), en particulier la tige de verrouillage (5) et le manchon de verrouillage (6), forment une butée de fin de course de pivotement (11a-c) lorsque la position de pivotement de verrouillage est atteinte, de sorte que, dans la position de pivotement de verrouillage, un engagement par complémentarité de formes agissant dans les deux sens de pivotement entre les deux parties d'arbre (3, 4) règne entre la tige de verrouillage (5) et le manchon de verrouillage (6).

4. Système de serrage d'outil selon l'une des revendications précédentes, **caractérisé en ce qu'**au moins une formation de butée (13a-c) disposée à la périphérie de la tige de verrouillage (5), de préférence au moins trois formations de butée (13a-c) réparties sur la périphérie de la tige de verrouillage (5), vien(nen)t en prise de blocage avec au moins une formation de butée conjuguée (14a-c) correspondante du manchon de verrouillage (6) au cours du mouvement de pivotement de verrouillage et forme ou forment la butée de fin de course de pivotement (11a-c), de préférence **en ce que** l'au moins une formation de butée (13a-c) et/ou l'au moins une formation de butée conjuguée (14a-c) est ou sont en même temps au moins une formation d'encliquetage (9a-c) ou une formation d'encliquetage conjuguée (10a-c).

5. Système de serrage d'outil selon l'une des revendications précédentes, **caractérisé en ce que**, par rapport au pivotement des deux parties d'arbre (3, 4) l'une par rapport à l'autre, une position de pivotement de déverrouillage est prévue, dans laquelle la première partie d'arbre (3) peut être insérée de manière coaxiale par sa tige de verrouillage (5) dans le manchon de verrouillage (6) de la deuxième partie d'arbre (4), de préférence **en ce que**, par rapport au pivotement des deux parties d'arbre (3, 4) l'une par rapport à l'autre, une région de pivotement de déverrouillage (15) est prévue, à l'intérieur de laquelle la première partie d'arbre (3) peut être insérée de manière coaxiale par sa tige de verrouillage (5) dans le manchon de verrouillage (6) de la deuxième partie d'arbre (4), de préférence **en ce que** la région de pivotement de déverrouillage (15) couvre une région angulaire d'au moins 25°, de préférence une région angulaire d'au moins 40°.

6. Système de serrage d'outil selon l'une des revendications précédentes, **caractérisé en ce qu'**au moins une partie d'arbre présente un biseau d'insertion qui, lors de l'insertion de la tige de verrouillage (5) dans le manchon de verrouillage (6), favorise un alignement des deux parties d'arbre (3, 4) l'une par rapport à l'autre dans la position de pivotement de déverrouillage.

7. Système de serrage d'outil selon l'une des revendications précédentes, **caractérisé en ce que**, dans la position de pivotement de déverrouillage et/ou dans la région de pivotement de déverrouillage (15), un jeu radial (16) est prévu entre la tige de verrouillage (5) et le manchon de verrouillage (6).

8. Système de serrage d'outil selon l'une des revendications précédentes, **caractérisé en ce que** la formation d'encliquetage (9a-c) et/ou la formation d'encliquetage conjuguée (10a-c) forment un contour doté d'une surélévation (17, 18) radiale en section transversale transversalement à l'axe longitudinal (8) géométrique commun, de préférence **en ce que** les régions de contour (19, 20) de chaque côté de la surélévation (17) radiale sont disposées différemment radialement, de telle sorte qu'au début du mouvement de pivotement de verrouillage (7), en particulier dans une position de pivotement de déverrouillage, un jeu radial (16) est présent entre la tige de verrouillage (5) et le manchon de verrouillage (6) et de telle sorte que, dans la position de pivotement de verrouillage, un flux de force radial règne entre la tige de verrouillage (5) et le manchon de verrouillage (6).

9. Système de serrage d'outil selon l'une des revendications précédentes, **caractérisé en ce que** la tige de verrouillage (5) et/ou le manchon de verrouillage (6) est ou sont configuré (e) (s) de manière à présenter une symétrie de révolution au moins dans certaines parties par rapport à l'axe longitudinal (8) géométrique commun, et/ou **en ce que** le contour est configuré de manière constante au moins sur une partie axiale en section transversale transversalement à l'axe longitudinal (8) géométrique commun de la tige de verrouillage (5) et/ou du manchon de verrouillage (6), et/ou **en ce que** le contour de la tige de verrouillage (5) en section transversale transversalement à l'axe longitudinal (8) géométrique commun présente une forme de base polygonale dotée d'un nombre impair de régions de coin qui forment respectivement une formation d'encliquetage (9a-c), de préférence **en ce que** la tige de verrouillage (5) présente en section transversale transversalement à l'axe longitudinal (8) géométrique commun une forme de base triangulaire dont les régions de coin forment les formations d'encliquetage (9a-c).

10. Système de serrage d'outil selon l'une des revendications précédentes, **caractérisé en ce que** les deux parties d'arbre (3, 4), lors de l'insertion axiale de la tige de verrouillage (5) dans le manchon de verrouillage (6), forment une butée de fin de course (21) axiale lorsque la position d'insertion finale axiale est atteinte, de préférence **en ce que** pour la formation de la butée de fin de course (21) axiale, un épaulement annulaire (22) aligné sur l'axe longitudinal (8) géométrique commun se raccorde à la tige de verrouillage (5), et/ou **en ce que** les deux parties d'arbre (3, 4) forment, pendant le mouvement de pivotement de verrouillage (7), un engagement par complémentarité de formes supplémentaire l'une avec l'autre, lequel, dans la position de pivotement de verrouillage, bloque un retrait axial de la première partie d'arbre (3) de la deuxième partie d'arbre (4) en sens inverse du sens d'insertion.

11. Système de serrage d'outil selon l'une des revendications précédentes, **caractérisé en ce qu'**une partie d'arbre (3) est la queue (25) d'un outil (24) rotatif et l'autre partie d'arbre (4) est le côté outil (26) d'un mandrin de serrage (27), et/ou **en ce qu'**une partie d'arbre (3) est le côté broche (28) d'un mandrin de serrage (27) et l'autre partie d'arbre (4) est la broche d'entraînement (29) d'une unité de machine-outil (1).

12. Unité de machine-outil comportant une broche d'entraînement (29) et un entraînement d'outil associé à la broche d'entraînement (29) ainsi qu'un système de serrage d'outil selon l'une des revendications précédentes, un mandrin de serrage (27) étant prévu pour un outil (24) rotatif, le mandrin de serrage (27) présentant un côté broche (28) pour la liaison à une broche d'entraînement (29) de l'unité de machine-outil (1) et un côté outil (26) pour la liaison à l'outil (24), le côté broche (28) ou le côté outil (26) formant une partie d'arbre (3, 4) du système de serrage d'outil (2).

13. Unité de machine-outil selon la revendication 12, **caractérisée en ce qu'**un générateur de vibrations est prévu, lequel, pour le perçage par vibrations, introduit des oscillations vibratoires dans la broche d'entraînement (29) en particulier dans la direction axiale et **en ce que** les oscillations vibratoires passent par le mandrin de serrage (27).

14. Unité de machine-outil selon la revendication 12 ou 13, **caractérisée en ce qu'**un dispositif de changement d'outil (31) est prévu, lequel reçoit une pluralité de mandrins de serrage (27) équipés d'outils (24), de préférence **en ce que**, pour le changement d'outil, le dispositif de changement d'outil (31) effectue l'insertion de la tige de verrouillage (5) dans le manchon de verrouillage (6).

15. Unité de machine-outil selon l'une des revendications 12 à 14, **caractérisée en ce que** l'entraînement d'outil (30) effectue le mouvement de pivotement de verrouillage (7), mieux encore **en ce que**, pendant le mouvement de pivotement de verrouillage (7), le dispositif de changement d'outil (31) fixe l'une des parties d'arbre (3, 4) du manchon de serrage (27) par rapport à un pivotement autour de l'axe longitudinal (8) géométrique commun, mieux encore **en ce que** le dispositif de changement d'outil (31) présente un magasin d'outil (33) doté de logements (34) pour le mandrin de serrage (27) et **en ce que** les logements (34) effectuent la fixation de la partie d'arbre (3, 4) respective.
